# EUROPÄISCHE PATENTSCHRIFT

(11) **EP 1 078 178 B1**
(45) Veröffentlichungstag und Bekanntmachung des Hinweises auf die Patenterteilung: **06.08.2003**
(21) Anmeldenummer: 99957944.4
(22) Anmeldetag: 28.10.1999
(51) Int. Cl.: F16H 1/32, H02K 7/116

(54) **EXZENTERZAHNRADGETRIEBE**
ECCENTRIC TOOTHED GEARING
TRANSMISSION A ROUE DENTEE EXCENTRIQUE

(30) Priorität: 12.03.1999 DE 19910922
(43) Veröffentlichungstag der Anmeldung: 28.02.2001
(73) Patentinhaber: ROBERT BOSCH GMBH, 70442 Stuttgart (DE)
(72) Erfinder: MOSKOB, Frank, D-77815 Buehl (DE)
(86) Internationale Anmeldenummer: DE9903455
(87) Internationale Veröffentlichungsnummer: WO00055523

(56) Entgegenhaltungen:
- DE-A- 4 127 051
- GB-A- 2 307 964
- NL-A- 9 400 140
- US-A- 5 479 058
- PATENT ABSTRACTS OF JAPAN vol. 017, no. 172 (M-1392), 2. April 1993 (1993-04-02) & JP 04 331850 A (IMAZAIKE SEIKOU KK), 19. November 1992 (1992-11-19)

## Beschreibung

### Stand der Technik

Die Erfindung betrifft ein Exzenterzahnradgetriebe zur Übersetzung der Drehbewegung von Verstellmotoren.

Aus der DE 41 27 051 A ist ein Exzenterzahnradgetriebe bekannt, bei dem ein auf einer Antriebswelle angeordneter Exzenter mit einem Exzenterrad zusammen wirkt, dessen Außenverzahnung in die Innenverzahnung einer Zahnkranzglocke greift. Das Exzenterrad wird dabei mittels eines als separates Bauteil ausgeführten Kreuzschlitzschiebers geführt, der verschiedene Führungsschlitze für Zapfen aufweist, die einerseits am Exzenterrad und andererseits gehäusefest angeordnet sind.

Zur Drehzahlreduzierung von Verstellmotoren mit einer Ankerdrehzahl von etwa 7000 Umdrehungen pro Minute werden in der Regel Schneckengetriebe eingesetzt. Die eingesetzten Schneckengetriebe, die von Elektromotoren angetrieben werden, zeichnen sich dadurch aus, dass sie eine Selbsthemmung von der Abtriebsseite her aufweisen. Wegen des zur Erzielung ausreichender Drehmomente notwendigen großen Übersetzungsverhältnisses, beispielsweise zum Antrieb als Fensterheber oder eines Schiebedaches in einem Kraftfahrzeug, sind die Außenabmessungen eines aus Motor und nebenliegend angeordneten Getriebe bestehenden Verstellmotors beträchtlich. Aus diesem Grund werden Exzenterzahnradgetriebe eingesetzt, die bei sehr kompakten Abmessungen eine Selbsthemmung und einen einfachen Aufbau aufweisen. Gegenüber den bekannten Schneckengetrieben ist das Exzenterzahnradgetriebe vergleichsweise toleranzunempfindlich, da alle rotierenden Teile auf einer Achse gelagert sind.

Wesentlicher Bestandteil des Exzenterzahnradgetriebes ist ein Exzenterrad, welches konstruktionsbedingt zwei unterschiedliche Bewegungen ausführen kann. Dies ist zum einen ein Abrollen an einer Außenverzahnung eines Mitnehmers, was zu einer kreisförmigen Bewegung um einen zur Achse des Exzenterrades exzentrischen Drehpunkt führt, zum anderen eine Drehung um sich selbst. Die Verdrehung um sich selbst ist unerwünscht und wird bei den bekannten Lösungen durch Führungselemente am Exzenterrad verhindert, welche in entsprechende Aufnehmungen eines fest mit dem Gehäuse verbundenen Gehäuseteils ragen.

Nachteilig bei dieser Art der Führung ist der hohe Verschleiß aufgrund einer starken mechanischen Belastung der an der Führung des Exzenterrades beteiligten Komponenten und die damit einhergehende, kurze Lebensdauer des Exzenterzahnradgetriebes, weiterhin die störende Geräuschentwicklung durch oszillierende Bauteile.

### Vorteile der Erfindung

Das erfindungsgemäße Exzenterzahnradgetriebe mit den Merkmalen des Hauptanspruchs hat den Vorteil, daß die Führung des Exzenterrades wesentlich verbessert wird. Durch das mit dem Exzenterrad zusammenwirkende Führungsritzel, das die Kreisbewegung des Exzenterrades gewährleistet und eine unerwünschte Verdrehung des Exzenterrades verhindert, wird die mechanische Belastung der an der Führung des Exzenterrades beteiligten Komponenten stark minimiert. Weiterhin wird ein besonders geräuscharmer Lauf des Exzenterzahnradgetriebes erreicht, das Getriebe ist wesentlich höher belastbar und der mechanische Verschleiß ist im Vergleich zu herkömmlichen Getrieben weitaus geringer.

Die Führung des Exzenterrades erreicht man erfindungsgemäß durch einen am Führungsritzel angeordneten Führungsritzelexzenter, der in ein Langloch des Exzenterrades greift. In diesem Langloch des Exzenterrades kann sich der Führungsritzelexzenter hin- und herbewegen und so eine von zwei linearen Bewegungskomponenten der kreisförmigen Bewegung des Exzenterrades aufnehmen.

Durch die in den Unteransprüchen aufgeführten Merkmale sind vorteilhafte Weiterbildungen des Exzenterzahnradgetriebes nach dem Hauptanspruch möglich.

Werden statt des einen Führungsritzels mehrere symmetrisch um das Exzenterrad angeordnete Führungsritzel eingesetzt, dann können die wirkenden Kräfte und somit die mechanische Belastung gleichmäßig verteilt werden. Vorstellbar ist beispielweise, daß zwei bis drei Führungsritzel um 180° bzw. 120° versetzt um das Exzenterrad angeordnet sind.

Wenn das Führungsritzel eine Führungsritzelaußenverzahnung aufweist, die in eine Drehantriebsaußenverzahnung greift, dann ist die Bewegung von Exzenterrad und Führungsritzel automatisch synchronisiert, was einen weiteren Vorteil darstellt.

Eine vorteilhafte Lösung für die Führung des Exzenterrades ist, daß die Exzentrizität des Führungsritzelexzenters der Exzentrizität des mit dem Exzenterrad in Verbindung stehenden Exzenters entspricht. Dann ist eine Voraussetzung dafür geschaffen, daß eine Verdrehung des Exzenterrades verhindert wird.

Die Anordnung des Führungsritzels relativ zum Exzenterrad ist weiterhin so zu treffen, daß der Mittelpunkt des Exzenters und der Mittelpunkt des Führungsritzelexzenters unabhängig von der Position des Drehantriebs auf einer Linie liegen, die parallel zu einer Linie durch die Achse des Drehantriebs und einem mit dem Führungsritzel verbundenen Stift verläuft. Damit ist die weitere Bedingung dafür erfüllt, daß das Exzenterrad gegen Verdrehung gesichert ist, jedoch in seiner exzentrischen Bewegung ungehindert gehalten werden kann. Somit ist auch die Kraftübertragung vom Elektromotor auf ein Abtriebsritzel gewährleistet.

Besonders vorteilhaft ist, wenn das Führungsritzel drehbar mit einem Stift verbunden ist, der in ein Getriebegehäuseteil ragt und fest damit verbunden ist. Dieser Stift kann einstückig an das Getriebegehäuseteil angeformt sein, und das Führungsritzel wird bei der Montage auf diesen Stift einfach aufgesetzt.

### Zeichnung

In der Zeichnung sind zwei Ausführungsbeispiele eines erfindungsgemäßen Exzenterzahnradgetriebes dargestellt und in der nachfolgenden Beschreibung näher erläutert.

Es zeigen
- Figur 1: ein Exzenterzahnradgetriebe im Längsschnitt,
- Figur 2: den vergrößerten Bereich I aus Fig. 1,
- Figur 3: eine Draufsicht entlang der Linie III-III aus Figur lin Teilansicht,
- Figur 4: eine Darstellung verschiedener Betriebszustände, und
- Figur 5: ein zweites Ausführungsbeispiel in analoger Darstellung zu Figur 3

### Beschreibung der Ausführungsbeispiele

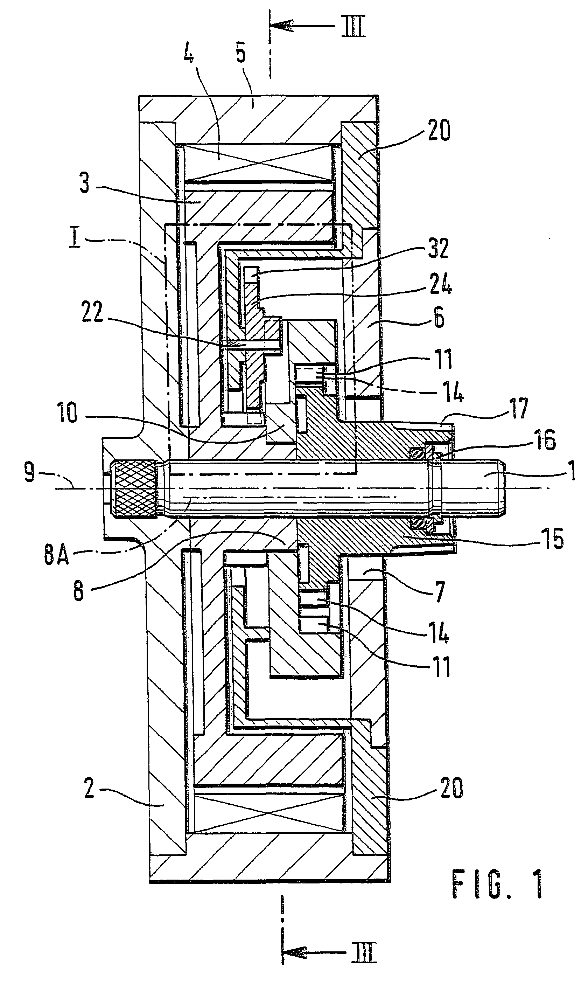

Das in Figur 1 dargestellte erste Ausführungsbeispiel zeigt einen Elektromotor mit einem Exzenterzahnradgetriebe, das eine Achse 1 aufweist, welche in einem Gehäuseboden 2 drehfest befestigt ist. Auf der Achse 1 ist ein Drehantrieb in Form eines Ankers 3 drehbar angeordnet, der durch Spulen 4 des Elektromotors angetrieben wird. Die Spulen 4 sind in einem zylindrischen Gehäuseabschnitt 5 innenliegend angeordnet, wobei an dem Gehäuseabschnitt 5 auch der Gehäuseboden 2 befestigt ist. Auf der dem Gehäuseboden 2 gegenüberliegenden Seite am Gehäuseabschnitt 5 ist ein Gehäuseteil 6 in Form eines Deckels mit einer zentralen Öffnung 7 fest angebracht. Durch diese zentrale Öffnung 7 ragt das dem Gehäuseboden 2 abgewandte Ende der Achse 1. Der Gehäuseabschnitt 5, der Gehäuseboden 2 und der Deckel 6 bilden ein Motorengehäuse, in dessen Inneren der auf der Achse 1 drehbare Anker 3 angeordnet ist, und der mit einem sich entlang der Mittelachse 9 axial erstreckendem Exzenter 8 mit seiner Exzenterachse 8A versehen ist. Auf dem Exzenter 8 ist ein Exzenterrad 10 drehbar gelagert, welches mit einer Innenverzahnung 11 versehen ist.

Die Innenverzahnung 11 des Exzenterrads 10 greift abschnittsweise in eine Außenverzahnung 14 eines Mitnehmers 15 ein, der drehbar auf der Achse 1 gelagert und mit Befestigungsmitteln 16 axial befestigt ist. Der Mitnehmer 15 ragt durch das Gehäuseteil 6 hindurch aus dem Motorgehäuse heraus und ist in diesem Bereich für den Getriebeausgang mit einer weiteren Außenverzahnung 17 versehen.

An einem Getriebegehäuseteil 20, welches den Motorenbereich vom Getriebebereich trennt, ist über einen fest mit dem Getriebegehäuse 20 verbundenen Stift 22 ein Führungsritzel 24 drehbar angeordnet. Das Führungsritzel 24 weist einen Führungsritzelexzenter 26 auf, der in ein Langloch 28 des Exzenterrades 10 ragt. Der Führungsritzelexzenter weist weiterhin eine Außenverzahnung 32 auf, die mit einer Außenverzahnung 30 des Ankers 3 kämmt.

Charakteristisch für das in Figur 1 dargestellte Exzenterzahnradgetriebe ist die extrem flache Bauweise, die durch die Integration des eigentlichen Getriebes in den freien Bauraum des Antriebs ermöglicht wird.

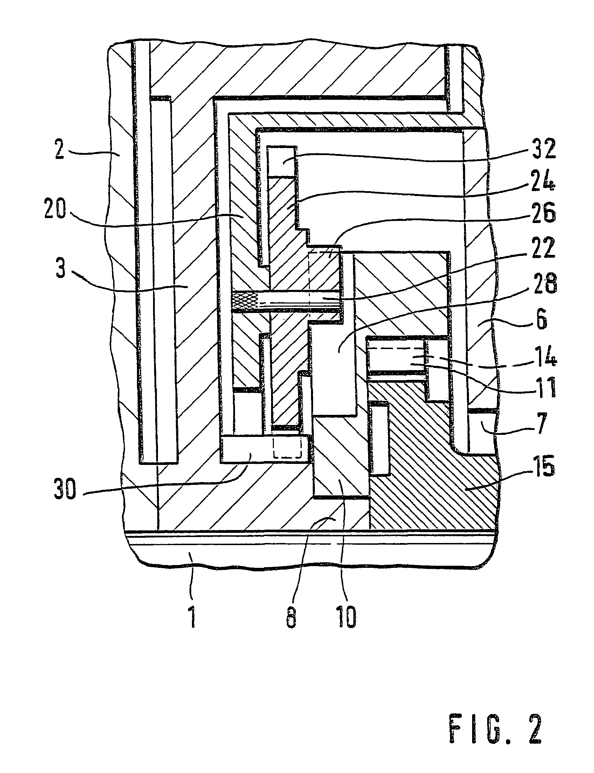

Die Merkmale, die das Führungsritzel 24 betreffen, sind der besseren Übersichtlichkeit halber noch einmal in vergrößerter Darstellung in Fig. 2 dargestellt. In dieser Fig. 2 sind wie in allen anderen Figuren die gleichen Merkmale mit den gleichen Bezugszeichen versehen.

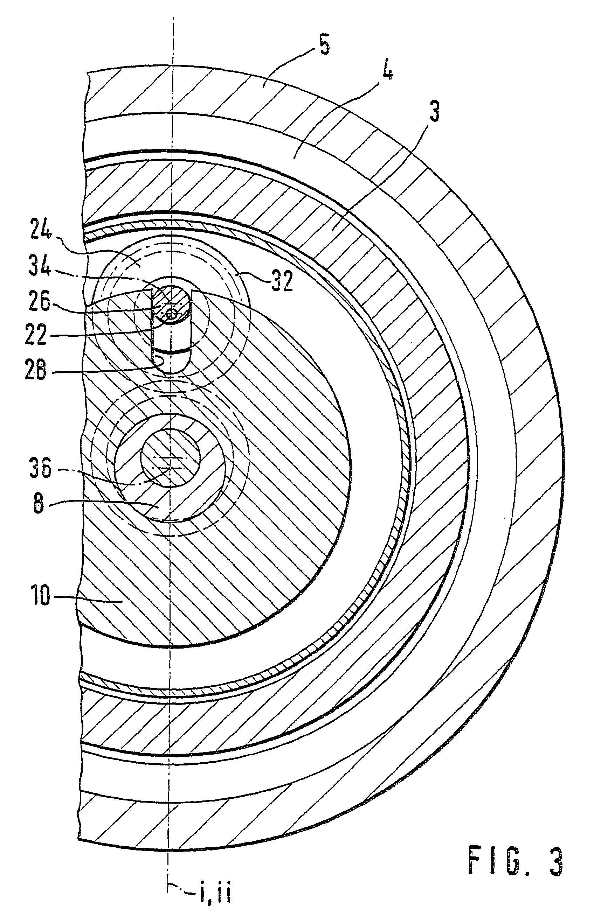

Fig. 3 zeigt eine Draufsicht auf das Ausführungsbeispiel eines erfindungsgemäßen Exzenterzahnradgetriebes in Teilansicht, wobei hier die Führung des Führungsritzelexzenters 26 in dem Langloch 28 des Exzenterrades 10 besonders gut zu erkennen ist, jedoch keine weiteren, neuen Merkmale dargestellt sind.

Zum besseren Verständnis des erfindungsgemäßen Exzenterzahnradgetriebes sei noch einmal kurz die Wirkungsweise eines derartigen Getriebes erläutert. Durch das in den Spulen 4 induzierten Magnetfeld dreht sich der Anker 3 um die Achse 1, die mit dem Gehäuseboden 2 drehfest verbunden ist. Durch die Drehung des Ankers 3 dreht sich auch der Exzenter 8 um die Achse 1.

Das auf dem Exzenter 8 drehbar gelagerte Exzenterrad 10 würde sich mit seiner Innenverzahnung 11 an der Außenverzahnung 14 des Mitnehmers 15 abwälzen, kann selbst aber - bedingt durch die Führung des Führungsritzels 24 keine Drehung um sich selbst ausführen. Somit wälzt sich der ebenfalls drehbar mit der Achse 1 verbundene Mitnehmer 15 mit seiner Verzahnung 14 auf der Innenverzahnung 11 ab. Durch dieses Abwälzen des Mitnehmers 15 in dem Exzenterrad 10 erzielt man eine Untersetzung der Drehbewegung des Mitnehmers 15, die über die Außenverzahnung 17 des Mitnehmers 15 weitergeleitet wird.

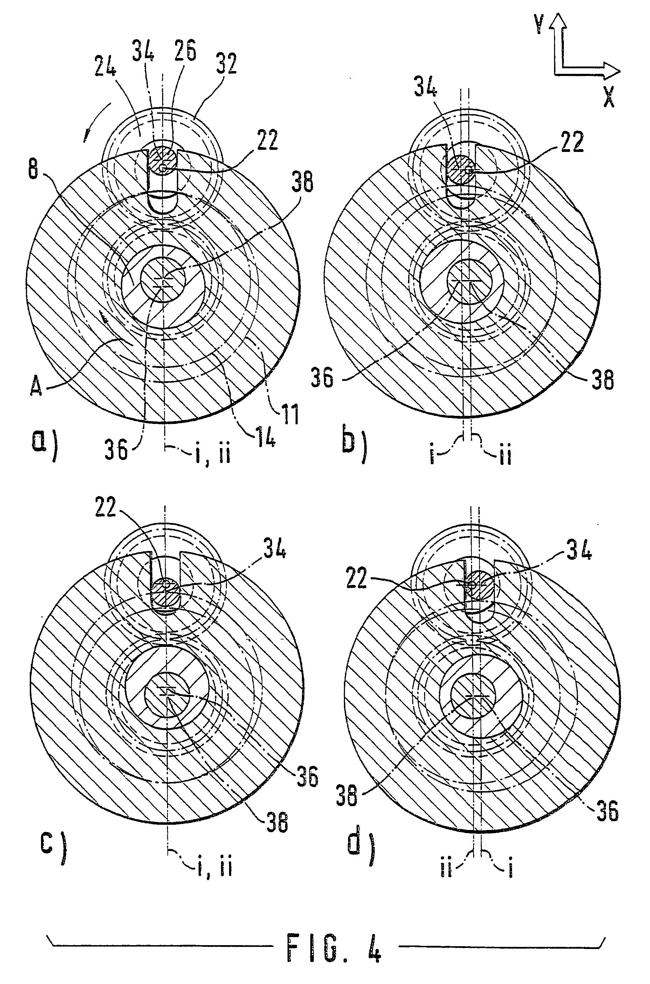

Das Exzenterrad 10 vollführt folglich eine Kreisbewegung, die von dem Führungsritzel 24 gestattet wird, weil es zum einen in dem Langloch 28 des Exzenterrades 10 geführt ist, und zum anderen die Exzentrizität des Führungsritzelexzenters 26 der des Exzenters 8 entspricht. Durch die Kopplung von Führungsritzel 24 und Anker 3 über zwei identische Außenverzahnungen 30 bzw. 32 und die definierte Montage des Führungsritzels laufen die beiden Exzenter 8 und 26 gegenläufig und beide Exzentermittelpunkte 34 bzw. 36 liegen - wie in Fig. 4 dargestellt - immer auf einer Linie i, die parallel zu einer zweiten Linie ii durch die Achse des Drehantriebs und den Stift 22 verläuft.

Das Zusammenspiel dieser Merkmale führt dazu, daß das Exzenterrad 10 zwar rotiert, sich aber nicht verdreht.

In den Figuren 4a bis c sind noch einmal vier verschiedene Betriebspositionen des Exzenterzahnradgetriebes dargestellt. Die Innenverzahnung 11 wälzt sich an der Außenverzahnung 14 in Pfeilrichtung A ab und das Führungsritzel 24 bewegt sich dazu in gegenläufiger Richtung. Die beiden Mittelpunkte 34 und 36 des Führungsritzelexzenters 26 bzw. des Exzenters 8 liegen in jeder Betriebsposition auf der Linie i, die sich entlang der X-Achse hin und her verschiebt und immer parallel zu der Linie ii liegt. Der Führungsritzelexzenter 26 bewegt sich im Langloch 28 entlang der Y-Achse hin und her. Diese beiden linearen Bewegungskomponenten in X- und Y-Richtung ergeben zusammengesetzt die kreisförmige Bewegung des Exzenterrades 10, die einen gleichmäßigen Abtrieb des Mitnehmers 15 gewährleistet. Die Führung des Führungsritzelexzenters in dem Langloch 28 verhindert jedoch wird ein unerwünschtes Verdrehen des Exzenterrades 10.

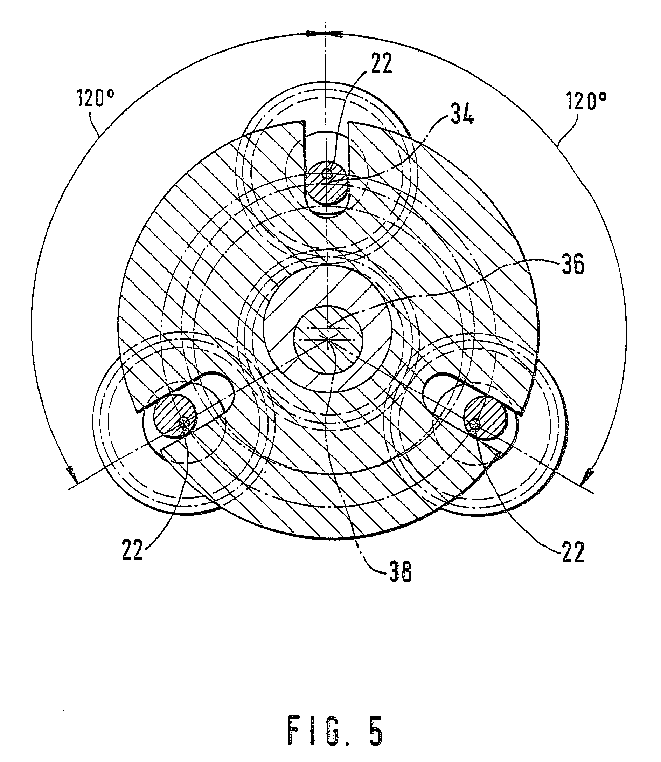

In Fig. 5 ist ein zweites Ausführungsbeispiel eines erfindungsgemäßen Exzenterzahnradgetriebes dargestellt, bei dem drei Führungsritzel jeweils um 120° zueinander versetzt angeordnet sind. An der prinzipiellen Funktionsweise ändert sich dadurch nichts, vorteilhaft bei dieser zweiten Variante ist jedoch die gleichmäßigere Verteilung der auftretenden Kräfte und eine gleichförmigere Abtriebsbewegung am Mitnehmer 15.

## Patentansprüche

1. Exzenterzahnradgetriebe, aufweisend einen mit einem Drehantrieb (3) zusammenwirkenden Exzenter (8), ein auf diesem drehbar gelagertes Exzenterrad (10) und einen Mitnehmer (15), der durch abschnittsweises Ineinandergreifen mit dem Exzenterrad (10) zusammenwirkt, **dadurch gekennzeichnet, dass** mindestens ein mit dem Exzenterrad (10) zusammenwirkendes Führungsritzel (24) vorgesehen ist, das einen Führungsritzelexzenter (26) aufweist, der in ein Langloch (28) des Exzenterrads (10) greift, um die Exzenterbewegung des Exzenterrades (10) zu gewährleisten und eine unerwünschte Verdrehung des Exzenterrades (10) zu verhindern.

2. Exzenterzahnradgetriebe nach Anspruch 1, **dadurch gekennzeichnet, dass** mehrere Führungsritzel (24) symmetrisch um das Exzenterrad (10) angeordnet sind.

3. Exzenterzahnradgetriebe nach Anspruch 1, **dadurch gekennzeichnet, dass** die Exzentrizität des Führungsritzelexzenters (26) der Exzentrizität des Exzenters (8) entspricht.

4. Exzenterzahnradgetriebe nach Anspruch 3, **dadurch gekennzeichnet, dass** das mindestens eine Führungsritzel (24) eine Führungsritzelaußenverzahnung (32) aufweist, die in eine Drehantriebsaußenverzahnung (30) des Drehantriebs (3) greift.

5. Exzenterzahnradgetriebe nach einem der vorherigen Ansprüche, **dadurch gekennzeichnet, dass** der Mittelpunkt (36) des Exzenters (8) und der Mittelpunkt (34) des Führungsritzelexzenters (26) unabhängig von der Position des Drehantriebs (3) auf einer Linie (i) liegen, die parallel zu einer Linie (ii) durch die Achse (1) des Drehantriebs (3) und einen Stift (22) verläuft.

6. Exzenterzahnradgetriebe nach einem der vorherigen Ansprüche, **dadurch gekennzeichnet, dass** das mindestens eine Führungsritzel (24) drehbar mit dem Stift (22) verbunden ist, der in einem Getriebegehäuseteil (20) verankert ist.

## Claims

1. Eccentric gearing, having an eccentric (8) which interacts with a rotary drive (3), an eccentric wheel (10) which is rotatably mounted on said eccentric (8), and a driver (15) which interacts with the eccentric wheel (10) through engagement in certain parts, **characterized in that** at least one guide pinion (24) which interacts with the eccentric wheel (10) is provided, said guide pinion (24) having a guide pinion eccentric (26) which engages in an elongated hole (28) of the eccentric wheel (10) in order to ensure the eccentric movement of the eccentric wheel (10) and to prevent undesired rotation of the eccentric wheel (10).

2. Eccentric gearing according to Claim 1, **characterized in that** a plurality of guide pinions (24) are arranged symmetrically about the eccentric wheel (10).

3. Eccentric gearing according to Claim 1, **characterized in that** the eccentricity of the guide pinion eccentric (26) corresponds to the eccentricity of the eccentric (8).

4. Eccentric gearing according to Claim 3, **characterized in that** the at least one guide pinion (24) has a guide-pinion outer toothing (32) which engages in a rotary-drive outer toothing (30) of the rotary drive (3).

5. Eccentric gearing according to one of the preceding claims, **characterized in that** the centre point (36) of the eccentric (8) and the centre point (34) of the guide pinion eccentric (26) are located, independently of the position of the rotary drive (3), on a line (i) which runs parallel to a line (ii) through the axis (1) of the rotary drive (3) and a pin (22).

6. Eccentric gearing according to one of the preceding claims, **characterized in that** the at least one guide pinion (24) is rotatably connected to the pin (22) which is secured in a gearing casing part (20).

## Revendications

1. Transmission par roue dentée excentrique qui présente un excentrique (8) agissant conjointement avec un entraînement de rotation (3), une roue excentrique (10) logée de façon à pouvoir tourner sur celui-ci et un entraîneur (15) qui agit conjointement avec la roue excentrique (10) grâce à un engrènement par segments,
**caractérisée en ce qu'**
au moins un pignon guide (24) agit conjointement avec la roue excentrique (10) et présente un excentrique de pignon guide (26) qui a prise dans un trou allongé (28) de la roue excentrique (10), afin d'assurer le mouvement excentré de la roue excentrique (10) et d'empêcher une torsion non souhaitée de la roue excentrique (10).

2. Transmission par roue dentée excentrique selon la revendication 1,
**caractérisée en ce que**
plusieurs pignons guide (24) sont disposés symétriquement autour de la roue excentrique (10).

3. Transmission par roue dentée excentrique selon la revendication 1,
**caractérisée en ce que**
l'excentricité de l'excentrique de pignon guide (26) correspond à l'excentricité de l'excentrique (8).

4. Transmission par roue dentée excentrique selon la revendication 3,
**caractérisée en ce que**
le pignon guide au moins unique (24) présente un endentement extérieur de pignon guide (32) qui a prise dans un endentement extérieur d'entraînement rotatif (30) de l'entraînement rotatif (3).

5. Transmission par roue dentée excentrique selon au moins l'une des revendications précédentes,
**caractérisée en ce que**
le centre (36) de l'excentrique (8) et le centre (34) de l'excentrique de pignon guide (26), indépendamment de la position de l'entraînement rotatif (3), se trouvent sur une ligne (i) parallèle à une ligne (ii) passant par l'axe (1) de l'entraînement rotatif (3) et par une broche (22).

6. Transmission par roue dentée excentrique selon au moins l'une des revendications précédentes,
**caractérisée en ce que**
le pignon guide au moins unique (24) est lié de façon à tourner avec la broche (22) qui est ancrée dans une partie de carter protecteur d'engrenages (20).
